Europäisches Patentamt

European Patent Office

Office européen des brevets

(11) Publication number: **0 116 369**
A2

# EUROPEAN PATENT APPLICATION

(21) Application number: **84101246.1**

(22) Date of filing: **07.02.84**

(51) Int. Cl.³: **E 21 B 43/267**
**C 04 B 35/18, C 04 B 21/06**

(30) Priority: **07.02.83 US 464244**

(43) Date of publication of application:
**22.08.84 Bulletin 84/34**

(84) Designated Contracting States:
**BE DE FR GB IT NL**

(71) Applicant: NORTON COMPANY
1 New Bond Street
Worcester Massachusetts 01606(US)

(72) Inventor: Khaund, Arup Kumar
4204 Brookdale Drive
Niagara Falls Ontario L2H 2B5(CA)

(74) Representative: Baillie, Iain Cameron et al,
c/o Ladas & Parry Isartorplatz 5
D-8000 München 2(DE)

(54) Proppant for fractured wells.

(57) A proppant medium for fractured wells consisting of spheres having a ceramic matrix, said matrix including 15 to 40% of micropores, said spheres having an individual particle bulk density of 2 to 3 grams per cubic centimeter, and said proppant medium having a permeability at 10,000 psi at least 400% greater than that of silica sand proppant media of the same particle size distribution. Such proppants can be produced by forming into pellets a mixture comprising bauxite, with or without a sintering aid, and, if desired, a high aluminous alumino-silicate clay, and firing said pellets, wherein there is included in said mixture a finely divided material which combusts or volatilizes during said firing so as to produce proppant particles having 15 to 40% by volume of micropores.

./...

CONDUCTIVITY (DARCY FT.)

BATCH 9150

BATCH 9135

SILKA SAND

APPLIED STRESS IN
THOUSANDS OF P.S.I.

0116369

This invention relates to a low density propping medium for propping fractures in oil or in gas wells.

Since the late 1940's when hydraulic fracturing of the formations adjacent oil wells was first practiced, it has been found necessary to inject solid granular propping agents into such formations to prevent closure of the fractures. Sand (flint) was apparently the first such solid propping agent to be employed. U.S. Patent 2,950,247 suggests the use of aluminum oxide spheres as propping agents. U.S. Patent 3,890,072 suggests the use of sintered bauxite spheres as an oil well proppant. U.S. Patent 4,068,718 teaches the use of sintered bauxite particles made according to the teaching of U.S. Patents 3,079,243 or 3,421,492 for oil well propping. U.S. Patent 3,967,138 suggests "alumina" proppants of a wide range of density and alumina content but contains no teaching of how the pellets are made and shows test results only for material having a density of 3.4 or greater.

An improved method for producing sintered bauxite proppant material in spherical form is taught in Australian Patent 521,830 published April 5, 1982. Canadian Patent 117,897 also teaches manufacture of sintered bauxite proppant having a density of greater than 3.57 g/cc and suggests the addition of as much as 30% of clay or other additives to the bauxite prior to forming and firing.

Our Application Serial No. 83106842.4 filed July 12, 1983, discloses a proppant made from high aluminous clay and bauxite, having a particle density of less than 3.4 (typically 3.1), together with relatively high strength.

CASE T-1841

U.S. Patent 4,068,718, referred to above, requires a density of at least 3.4 g/cc in the proppant in order to provide sufficient compressive strength. The compressive strength required in said patent is such that the proppant does not lose more than 75% of its permeability when the compressive load is increased from 1,000 psi to 10,000 psi, by a standardized permeability test.

U. S. Department of Energy publication <u>Lightweight Proppants for Deep Gas Well Stimulation</u>, published April, 1982, suggests reducing the density of proppant media by specific ways of making the media porous.

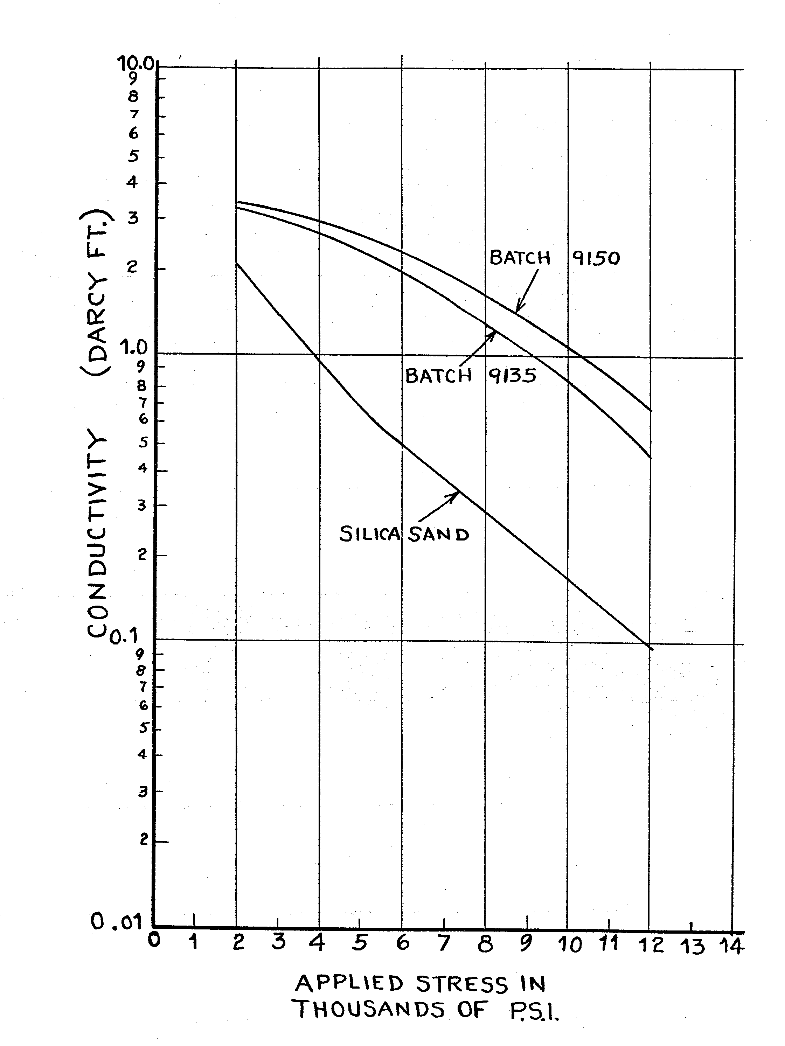

The drawing is a plot of conductivity versus load for proppant of this invention and for silica sand proppant. The conductivity is plotted on a logarthmic scale and the load on a linear scale.

The present invention is a proppant having lower density than prior art bauxitic proppants while retaining sufficient strength to be useful and effective in most proppant applications. The proppant of the present invention has a density of from 2 to 3.1 g/cc and has at least 300% greater permeability under high compressive stress than silica sand proppant.

Lower density of the proppant is desirable in providing more volume of proppant per unit weight, that is, more permeability per pound of proppant, and in enhanced handling properties. A light weight proppant is easier to pump into the well and may be carried more readily into the cracks in the formation than a more dense proppant.

The proppant of the present invention can be made from bauxite, with or without sintering aids, or from mixtures of bauxite and a source of silica, such as a high aluminous clay of the types described in our above-mentioned application. The proppant differs from prior art proppants made from such raw materials in that it contains porosity in the amount of 15 to 45%.

The method of inducing porosity into the proppant is by including a finely divided material in the raw mix, which material is removed by thermal or oxidation processes during processing. Thus volatile or combustable materials of any kind, so long as they cause no adverse chemical or physical reaction in the processing and so long as they can be prepared to have a suitable particle sizing, can be employed. Ideally the pore-inducing particles should approach spherical in shape and should have a size such as to produce pores larger than the ultimate particle size of the crystalline matrix of the proppant but smaller than about 30 microns, which pores are referred to herein as micropores. While there is no sharp critical upper limit in induced pore size, theory predicts that the strength of a brittle ceramic proppant material will be inversely proportional to the square root of the pore size.

The significance of introducing pores in the ceramic body by thermal removal of "filler" materials during sintering at the optimum temperature is that the resultant product has a porous structure with dense and strong "bridges" of materials interconnecting the pores unlike under-sintered ceramics (obtained by sintering at a lower temperature than required for a dense body) where the pores are not interconnected by a strong dense "bridge" of materials between them; hence the low density microporous proppants made by thermal removal of filler materials as described in the present invention have improved strength (and consequently improved permeabilities) compared to the microporous proppants made by other methods with the same volume percent and size distribution of pores.

The requirement that the size of the pore producer should not be smaller than the ultimate crystalline size of the ceramic body stems from the fact that if the size of the pores produced during the low temperature (200-250°C.) burn-out of filler materials during sintering process is smaller than the ultimate crystalline size of the ceramic proppant, then during the final sintering process at high temperature, these small pores may easily "diffuse" out to surface leaving a non porous fully dense body instead of a low density porous structure with strong and dense "bridges" of materials interconnecting the pores.

While there are many suitable candidates for the particulate pore inducing agent, such as nut shells, sawdust, cereal waste, and other vegetable matter, and, alternatively synthetic volatile organic materials such as paradichlorobenzene. The main criteria in choice of such material is cost, particle size, shape, and inertness in the pelletization and firing steps. Very low density materials such as organic or inorganic microspheres can be employed, but are difficult to mix because of their extremely low density relative to the total mix.

An important part of the production of strong proppant spheres from the mix of bauxite, with or without other materials, and the pore-inducing material is the pelletization method. While other known pelletization methods may be used, the best way to produce pellets of suitable shape, size, and green density at present appears to be the method taught in German application Dt. Os. 2921336 published December 13, 1979. In that method the raw batch dry powder is mixed with water in a high intensity mixer, and a second addition of dry mix is added after an initial period of mixing. The thus formed spheres are then dried, sized and fired at 1250°C. or above to produce proppant medium.

In the instant invention the raw batch powder is modified by an additive which, upon firing of the spherical pellets produces from 15 to 40% micropores, said micropores are usually from 5 to 30 microns in diameter.

Instead of bauxite as the raw material we may employ bauxite together with a sintering aid, such as manganese dioxide, or we may employ a blend of bauxite and high aluminous clay, as disclosed in the above-mentioned patent application, whereby the major phase in the product is crystalline mullite formed by the reaction between alumina and silica which is mainly in the form of aluminosilicates in the high aluminous clay. Such a clay contains essentially all of its alumina in the form of hydrated alumino-silicate clay mineral, not in the form of hydrated alumina. The clay contains 50 to 65% combined aluminum (calculated as $Al_2O_3$) and 28 to 42% combined silicon (calculated as $SiO_2$). The clay contains well under 1% of alkali and alkaline earth elements and the major impurities in the clay are titania and iron, up to 7% total. Another such clay is a higher average alumina, lower silica-content clay, having an alumina content (calculated on $Al_2O_3$) of 63 to 67%, an alkali and alkaline earth content of under 1%, and a silica content of 18 to 25% (all on an anhydrous basis).

## SPECIFIC EXAMPLES OF THE INVENTION

Sample I. Batch #9150. An Eirich R7 high intensity mixer (available from Maschinenfabrik Gustav Eirich, Federal Republic of Germany) was employed with a standard pin type mixing tool. The mix consisted of an 85 volume percent of a ceramic composition of 49 wt. percent bauxite with 49 weight percent of a high aluminous clay and 2 wt. percent of manganese dioxide, all of which was blended and milled with 15 volume percent of walnut shell flour to an average particle size of 6 microns. Thirty five pounds of this mixture was then dry mixed at high speed with 0.6 pounds of cereal starch for two minutes. Then thirteen pounds of water was added with mixing at high speed continuing for two and one half minutes, at which time the mixing was switched to slow speed for about 30 seconds. Fifteen pounds of dry powder mix of the ceramic composition and walnut shell flour was then added at the rate of 2 to 3 pounds per minute with the mixer running at slow speed. After the addition was completed, mixing was continued for 30 seconds. The green spherical pellets thus formed were dumped from the mixture, dried at 200°F. and then sintered in a rotary furnace at 1500°C. for 45 minutes. During this sintering process, walnut shell particles distributed throughout the proppant body were burned out leaving a proppant product with a network of pores interconnected by a strong dense "bridge" of ceramic materials. For this composition, the purpose of adding $MnO_2$ was to aid in sintering of these ceramic "bridges" of materials between the pores.

Because of the significant amount of open pores in these low density proppants, air pycnometer could not be used to correctly determine the true bulk density of the materials as air permeates through these open pores giving true volume of the proppant rather than the true "bulk" volume required for calculating the true bulk density of the proppant. Hence these porous proppants were subjected to a true bulk density measurement by a "wax enclosure" method. The method involves measuring volume V, of a beaker with a known amount of low melting wax by an air pycnometer. The wax is then remelted, a known weight 'W' of porous proppants were dropped to the molten wax and then the wax was frozen instantaneously in a freezer to avoid any wax being penetrated into the open surface pores of the proppant. The volume ($V_2$) of the beaker, wax and the enclosed proppants were then remeasured by an air pycnometer. The true bulk volume i.e., the volume of the proppant including both the volumes of the closed pores and open pores is $V_2 - V_1$ and the true bulk density is W divided by the quantity $V_2 - V_1$. The difference between true bulk density so determined, and weight per cubic foot determination is that weight per cubic foot measurements depend on shape and size of proppant materials, i.e. how closely they can pack together in a given determination, whereas the true bulk density is independent of the shape and size of the product. Hence to compare weight per cubic foot measurements between two different proppant materials to determine which is denser or lighter, the two materials must have the same shape and size distributions. However, for most practical applications, weight per cubic foot values of given mesh sizes are a quick indicator of relative true bulk densities of various proppant materials as the shapes of various proppant materials are mostly spherical.

Conductivity (in Darcy-Ft. unit) values measured on 25/30 sized materials (about 700 microns) of batch #9150 are given below along with that of sand in Table I. Also included in Table I are true bulk density by "wax enclosure" method described above and weight per cubic foot for both batch #9150 and silica sand for comparison.

TABLE I   WPCF = Weight per cubic foot for 25/30 U.S. size.

| Batch | WPCF | True Bulk Density (g/cc) | Applied Stress (PSI) | | Conductivity (Dracy-Ft.) | Conductivity Ratio 10,000/1,000 |
|-------|------|--------------------------|----------------------|--|--------------------------|---------------------------------|
| 9150 | 96.6 | 2.69+.05 | 1000 | (extra- | 3.7 | 1.11/3.7=0.3 |
| | | | 2000 | polated) | 3.45 | |
| | | | 4000 | | 2.86 | |
| | | | 6000 | | 2.19 | |
| | | | 8000 | | 1.59 | |
| | | | 10000 | | 1.11 | |
| | | | 12000 | | 0.68 | |
| Silica Sand | 96 | 2.65+.05 | 1000 | (extra- | 2.7 | .18/2.7=0.066 |
| | | | 2000 | polated) | 1.97 | |
| | | | 4000 | | 0.95 | |
| | | | 6000 | | 0.51 | |
| | | | 8000 | | 0.30 | |
| | | | 10000 | | 0.18 | |
| | | | 12000 | | 0.10 | |

From Table I, it is seen that proppant 9150 with a true bulk density similar to that of sand meets the strength criteria stipulated in Cooke's patent (U.S. Patent 4,068,718) which is that the proppant does not lose more than 75% of its conductivity (or permeability) when the compressive load is increased from 1000 PSI to 10,000 PSI by a standardized conductivity (or permeability) test. The conductivity values were obtained by performing permeability tests in a brine (KCl) medium by a method described in the Journal of Petroleum Technology, September, 1973, pages 1101-1107, by C.E. Cooke and then multiplying the permeability values at various stresses by the fracture width (in feet) which was kept constant during the permeability test.

Example II. Batch #9135. This batch was produced by co-milling 75% by volume bauxite and 25% by volume walnut shell flour to an average size of 5-6 microns. The milled material was then pelletized in a similar way described in Example I and tested in the same way as Example I. The results are given in Table II. The probable reason that the true bulk density of #9135 is similar to that of #9150 (See table I) even when 9135 has 25% by volume of pore producer against 15% by volume of pore producer in 9150 is because of the fact that the true density of the ceramic composition (mullite) in batch 9150 is 3.2 gms/cc, whereas the true density of bauxite in batch 9135 is 3.7 gms/cc.

TABLE II WPCF - Weight per cubic feet for 25/30 U.S. Size

| Batch | WPCF | True Bulk Density (g/cc) | Applied Stress (PSI) | | Conductivity (Dracy-Ft.) | Conductivity Ratio 10,000/1,000 |
|-------|------|--------------------------|----------------------|--|--------------------------|-------------------------------|
| 9135 | 98.5 | 2.72±.05 | 1000 | (extra- | 3.4 | .77/2.3 = 23 |
| | | | 2000 | polated) | 3.34 | |
| | | | 4000 | | 2.60 | |
| | | | 6000 | | 1.94 | |
| | | | 8000 | | 1.28 | |
| | | | 10000 | | 0.77 | |
| | | | 12000 | | 0.49 | |
| Silica Sand | 96 | 2.65±.05 | 1000 | | 2.7 | .18/2.7 - .066 |
| | | | 2000 | | 1.97 | |
| | | | 4000 | | 0.95 | |
| | | | 6000 | | 0.51 | |
| | | | 8000 | | 0.30 | |
| | | | 10000 | | 0.18 | |
| | | | 12000 | | 0.10 | |

Conductivity values of both Batch 9150 and 9135 are plotted in the fugure along with that of silica sand. At 10,000 PSI conductivity values for both batch 9150 and 9135 points out the usefulness of using a sintering aid such as $MnO_2$ to strengthen the "bridges" between interconnecting pores in the proppant material as conductivity values are about 44% better for 9150 over that of 9135.

For both 9150 and 9135 batches, the conductivity values are respectively about 600% and 400% better than that of silica sand at 10,000 PSI and both have a true bulk density equivalent to that of sand.

The composition of the fired product for batch 9150 was essentially mullite.

## CLAIMS

1.       A proppant medium for fractured wells, said proppant comprising particles of generally spherical shape having a ceramic matrix, said matrix including 15 to 40% by volume of micropores, said spherical particles having an individual particle bulk density of 2 to 3 grams per cubic centimeter, and said proppant medium having a permeability at 10,000 psi at least 400% greater than that of silica sand proppant media of the same particle size distribution.

2.       A proppant medium as in claim 1, in which the ceramic matrix is sintered bauxite or a sintered mixture of bauxite and a source of silica.

3.       A proppant medium according to claim 1 or 2, which has a loose packed density within 20% of the loose packed density of silica sand of the same shape and particle size distribution.

4.       A method for making general spherical sintered ceramic proppant particles, which comprises forming into pellets a mixture comprising bauxite, with or without a sintering aid, and, if desired, a high aluminous alumino-silicate clay, and firing said pellets, wherein there is included in said mixture a finely divided material which combusts or volatilizes during said firing so as to produce proppant particles having 15 to 40% by volume of micropores.

CASE T 1841